Europäisches Patentamt

European Patent Office

Office européen des brevets

(19)

(11)  EP 1 235 205 A2

(12)  EUROPEAN PATENT APPLICATION

(43) Date of publication:
28.08.2002  Bulletin 2002/35

(51) Int Cl.⁷: **G11B 5/00**, G11B 5/02,
G11B 5/012
// G11B5/40, G11B19/04

(21) Application number: 02100189.6

(22) Date of filing: 26.02.2002

| | |
|---|---|
| (84) Designated Contracting States:<br>**AT BE CH CY DE DK ES FI FR GB GR IE IT LI LU**<br>**MC NL PT SE TR**<br>Designated Extension States:<br>**AL LT LV MK RO SI** | (72) Inventors:<br>• **NG, David**<br>**CA - 92620, Irvine (US)**<br>• **ISOBE, Yuji**<br>**CA - 92602, Irvine (US)** |
| (30) Priority: **26.02.2001  US 794508** | (74) Representative: **Holt, Michael et al**<br>**Texas Instruments Ltd.,** |
| (71) Applicant: **Texas Instruments Incorporated**<br>**Dallas, Texas 75251 (US)** | **EPD MS/13,**<br>**800 Pavilion Drive**<br>**Northampton Business Park,**<br>**Northampton NN4 7YL (GB)** |

(54)  **System and method providing programable gmr head pin layer reset in conjunction with high density drive read/write preamplifiers**

(57)  A system (10) and methodology is provided for resetting a pin layer within a GMR/Spin-Valve head (40). The system includes a preamplifier (20) to at least one of read, write, and bias a GMR head (40) having a pin layer (44). A pin layer reset circuit (30) generates a programmable signal (56) to reset the pin layer (44), wherein the programmable signal is adjustable according to at least one of a signal magnitude, signal polarity, signal pulse duration, and signal duty cycle. The programmable signal can include a voltage and and/or current.

Fig. 1

EP 1 235 205 A2

## Description

TECHNICAL FIELD OF THE INVENTION

The present invention relates generally to magnetic storage systems, and more particularly to a system and method providing a pin layer reset for a Giant MagnetoResistive (GMR) head via an integrated pre-amplifier architecture, wherein the pin layer reset is controlled by a programmable signal magnitude, signal polarity, and signal pulse duration with associated duty cycle control.

BACKGROUND OF THE INVENTION

Magneto resistive heads are employed with computer disk drives to write and/or read data to and from a magnetic storage media. Amplifiers and other interface circuitry are also utilized to interact with the head in order to store and retrieve the data. Older generation anisotropic magneto restive (MR) type heads generally employ a thin-film material on the head as a reader. As the head traverses the storage medium, resistance changes occur in the film material depending on a magnetic field applied to the film. A preamplifier circuit converts the resistance changes to a voltage or current to determine the storage media data. Newer generation heads, known as Giant Magneto Resistive (GMR) type heads utilize what is known as Spin-Valve technology to interact with the storage media. This technology generally incorporates a plurality of layers having various properties in the head. In general, a change of resistance is sensed in order to interface to the storage media.

For example, Spin-Valves are GMR systems in which the electrical resistance varies as a function of the direction of a magnetic field rather than as a function of the magnetic field strength. The Spin-Valve derives its name from the phenomena that the angle of a magnetic field is dictated by the direction of spin of electrons in the sensing layer associated therewith. A Spin-Valve is typically formed of two ferromagnetic layers spaced apart from one another layer of nonmagnetic material, which serves to magnetically couple the ferromagnetic layers from each other. In addition, one of the ferromagnetic layers has a magnetization which is spatially fixed (or "pinned") by an underlying anti-ferromagnetic layer which the other ferromagnetic layer has a magnetization which is allowed to follow an external magnetic field (and is often referred to as a "free layer" or a sensing layer). The electrical resistance of the Spin-Valve is given by the formula:

$$R = R_0 + R_+ + (1 - \cos(A))/2,$$

wherein A represents the angle between the magnetic alignments of the ferromagnetic layers. Consequently, a Spin-Valve may be employed as an angular sensor.

As discussed above briefly, one of the layers in a GMR head is known as a pin layer due to its magnetization direction being fixed. The pin layer can block the flow of electrons from other layers in the Spin-Valve which are sometimes referred to as sensing layers. The pin layer is generally biased with an external magnetic field to be orthogonal to the sensing layers. As the head traverses the storage media, an applied magnetic field alters the spin of the sensing layer. If the sensing layer aligns (e.g., spins aligned between layers) with the pin layer based on the applied field, a current flows which can be detected as a state of a data bit. Conversely, if the pin layer and sensing layer are not aligned, little or no current is detected resulting in the opposite state for the data bit.

It is important that the pin layer maintain a substantially precise electronic and mechanical relationship with the sensing layers in order to properly read data from the storage media. This relationship is generally established by heating the head in the presence of a magnetic field to a temperature known as the blocking temperature, which is about 200 to 300 degrees C. The head is then cooled in the presence of the external magnetic field to establish a permanent spin bias for the pin layer. Unfortunately, phenomena can occur that cause the bias in the pin layer to become disturbed.

One such phenomena is referred to as a Thermal-asperity event. As the head traverses the storage media, particles can become trapped between the head and the storage media causing heating within the head. The heating can cause the pin layer bias to become disrupted such that the head no longer functions properly. Other events such as an Electrostatic Discharge (ESD) can also cause similar problems. A remedy for this problem is to apply a pulse or series of pulses to the pin layer in order to "heal" or reset the pin layer back to its normal bias. The pulses, if applied properly, cause heating in the pin layer to undo the damage caused by the Thermal-asperity and/or ESD events. These pulses are generally applied by the preamplifier that interfaces to the head. All GMR heads are not constructed in the same manner or with the same materials, however. Thus, some heads may require positive or negative voltage pulses in order to reset the pin layer. These pulses may also have different amplitude and timing requirements depending on the materials in the head.

Some head stack manufacturers provide pin layer reset circuits externally or within preamplifiers designed specifically for the associated head. These circuits generally provide predetermined pulse parameters (e.g., amplitude, polarity, timing) that match the characteristics of the manufacturer's head material. However, preamplifiers and associated reset circuits that are designed for one particular type of head will likely not be compatible with other types of heads because of the predetermined/preconfigured nature of the pin layer reset circuits. Thus, conventional preamplifiers with pre-configured pin layer reset circuits have little compatibility with a plurality of other head designs manufactured from different materials and thus having different requirements for resetting the pin layer.

In view of the above problems associated with conventional pin layer reset circuits, there is a need for a system and/or methodology to enable compatibility between preamplifier pin layer reset circuits and a plurality of GMR heads.

SUMMARY OF THE INVENTION

The present invention provides a system and methodology which facilitates compatibility between a preamplifier pin layer reset circuit and a plurality of GMR heads having various pin layer reset requirements. This is achieved by providing a configurable pin layer reset signal that can be adjusted programmatically for signal amplitude, polarity, pulse duration and duty cycle to enable the signal to be adjusted according to the reset parameters of the head. The present invention employs standard circuitry, input/output pins and a user interface that are readily available in existing MR preamplifier designs along with minimal additional components to provide the configurable pin layer reset signal. Moreover, positive and negative polarity signals are achieved without generating a negative voltage or current within the preamplifier or the pin layer reset circuit. This enables the configurable circuit and preamplifier of the present invention to be implemented within a standard integrated circuit (IC) without having to drive the substrate of the IC to a negative potential.

More particularly, the present invention utilizes a mode setting to disengage a normal operation read circuit of a preamplifier and engage the pin layer reset circuit of the present invention. The mode setting also routes write data lines associated with a preamplifier write circuit to a programmable timing circuit to control a pulse width and a pulse width duty cycle of the pin layer reset signal. A programmable interface circuit in conjunction with a digital to analog converter is employed to control the amplitude of the pin layer reset signal. A programmable polarity signal controls electronic switches for directing and/or reversing a voltage or current to the pin layer. In this manner, the polarity of the pin layer reset signal may be configured to the requirements of the head without generating a negative voltage or current within the preamplifier and associated pin layer reset circuit.

Therefore the present invention provides programmable GMR head pin layer reset functionality that enables a pin layer reset to be accomplished on the fly when the disk drive associated therewith is in the field. Consequently, Thermal-asperity events or ESD occurrences which impact the pin layer bias can be addressed without having to remove the hard disk drive from its system environment. Thus the present invention facilitates a relatively easy maintenance of hard disk drive systems in which the invention is employed.

BRIEF DESCRIPTION OF THE DRAWINGS

The following description and the annexed drawings set forth in detail certain illustrative aspects of the invention. These aspects are indicative, however, of but a few of the various ways in which the principles of the invention may be employed and the present invention is intended to include all such aspects and their equivalents. Other advantages and novel features of the invention will become apparent from the following detailed description of the invention when considered in conjunction with the accompanying drawings in which:

Fig. 1 is a schematic block diagram illustrating a programmable GMR head pin layer reset system in accordance with the present invention;
Fig. 2 is a schematic block diagram illustrating a programmable GMR head pin layer reset circuit in accordance with one particular aspect of the present invention;
Fig. 3 is a schematic block diagram illustrating exemplary timing control logic in accordance with an aspect of the present invention;
Fig. 4 is a schematic block diagram illustrating an exemplary timing control state machine in accordance with an aspect of the present invention;
Fig. 5 is a flow chart diagram illustrating a methodology for a timing control state machine in accordance with an aspect of the present invention;
Fig. 6 is a schematic block diagram illustrating exemplary interface and conversion circuits in accordance with an aspect of the present invention; and
Fig. 7 is a flow chart diagram illustrating a methodology for providing a pin layer reset in accordance with an aspect of the present invention.

DETAILED DESCRIPTION OF THE INVENTION

The present invention is now described with reference to the drawings, wherein like reference numerals are used to refer to like elements throughout.

The present invention relates to a system and methodology for resetting a pin layer within variously configured GMR heads. A programmatically adjustable signal is provided for resetting the GMR heads. The signal is adjustable according to the signal amplitude, timing, and polarity associated therewith. The present invention utilizes preamplifier components in conjunction with amplitude, switching, and timing components, some of which may preexist in standard preamplifiers, to control the pin layer reset signal. By providing adjustable pin layer reset signal amplitude, timing, and polarity control, the present invention improves preamplifier compatibility with a plurality of GMR head designs having different properties and constructed from various manufacturers.

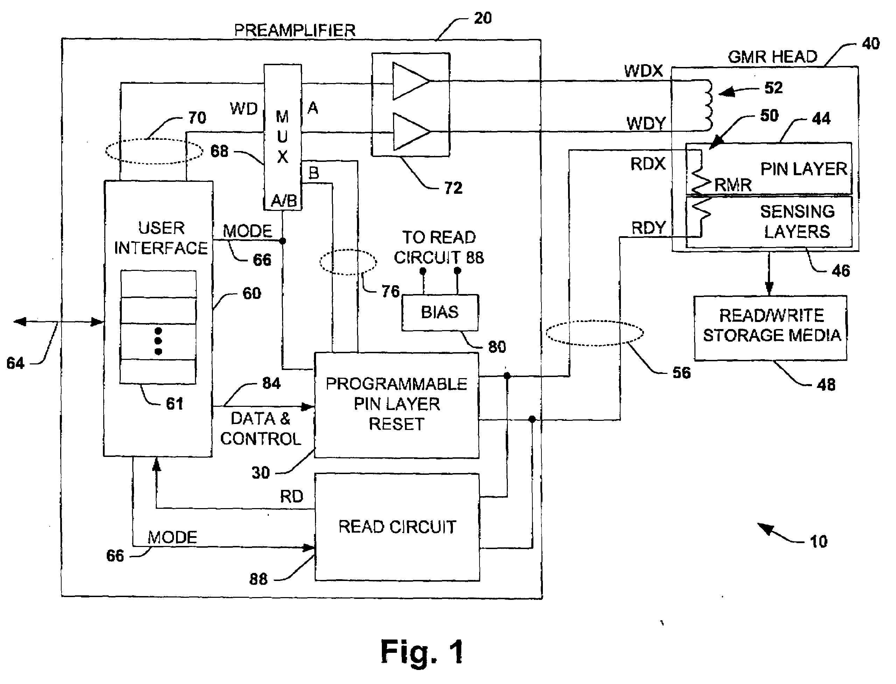

Referring initially to Fig. 1, an exemplary system 10 illustrates an aspect of the present invention relating to a programmable pin layer reset for a GMR head. The system 10 includes a preamplifier 20 with a programmable pin layer reset circuit (PPLR) 30 and a GMR head 40. The GMR head 40, which is well understood, illustrates a simplified model of a GMR head having a pin layer 44 and sensing layers 46 for reading and writing to a storage media 48. The pin layer 44 can be modeled as a resistance RMR 50 for read accesses to the GMR head 40. An inductance model 52 is provided for write accesses to the GMR head 40. In accordance with the present invention, the GMR head 40 can be constructed out of substantially any materials that interface to a resetable pin layer 44. The pin layer 44 may thus be reset via the RMR 50 according to various voltages, currents, signal amplitudes, timings, and signal polarity associated with differing pin layer parametric requirements of various manufacturers of the GMR head 40.

The PPLR 30 provides a programmable/configurable signal 56 such as a voltage or current to "heal" or reset/repair the pin layer 44 according to varying reset requirements of different manufacturers of the GMR head 40. As described above, pin layer resets tend to restore a suitable spin bias in the pin layer 44 when physical phenomena such as Thermal-asperity cause the bias to be disrupted. As will be described in more detail below, the signal 56 can be configured via a user interface 60 to provide an adjustable pin layer voltage or current to the RMR 50. This includes enabling programmable signal magnitudes, signal polarities across the RMR 50, signal pulse durations and signal duty cycles associated with the pin layer reset signal 56. In this manner, a GMR head 40 requiring differing reset parameters may be interfaced with the preamplifier 20 of the present invention. For example, some GMR heads require positive reset signals wherein others require negative or reverse direction reset signals. Other heads may require differing signal amplitudes with differing timing requirements in order to suitably reset the pin layer 50.

In accordance with one exemplary aspect of the present invention, the programmable/configurable signal 56 resides on the same pin(s) of the preamplifier circuit 20 as the preamplifier reader input and is configured internal to the preamplifier to operate as the pin layer reset signal in one mode of operation and as a GMR head read signal in a normal mode of operation (*e.g.*, a read mode). In this context, the signal 56 is bidirectional, operating in one direction in a pin layer reset mode, and in the opposite direction in a normal non-reset mode (*e.g.*, a read mode). Consequently, the preamplifier 20 in this exemplary aspect of the present invention does not require an additional I/O pin, and thus the pin layer reset functionality of the present invention is transparent to external systems.

The user interface 60 receives control and data inputs 64 from a disk drive user circuit or controller (*e.g.*, High Density Disk Drive) (not shown) and provides a mode signal 66 to enable the PPLR 30 and disable portions of the preamplifier 20 during pin layer resets. According to one exemplary aspect of the present invention, the user interface 60 includes one or more registers 61 as storage elements for containing various pieces of data relating to, for example, a desired signal amplitude, timing, and polarity, for a pin layer reset function. In one exemplary aspect of the present invention, such registers 61 may be employed, wherein each set of registers is uniquely associated with a type of GMR head such that for a given GMR head identified by the system 10, a particular set of registers 61 will be utilized in providing unique pin layer reset control information for the given GMR head.

When engaged, the mode signal 66 causes a multiplexer (MUX) 68 to route write data signals 70 that normally (non-reset mode) are directed to write buffers 72 for interfacing to the head inductance 52. As will be described in more detail below, the write data signals 70 that become write data signals 76 during reset mode may be utilized to control the timing of the reset signal 56. The mode signal 66 also disengages the MR head bias circuit 80 that normally is coupled to the signal 56. A data and control bus 84 is provided by the user interface 60 to enable programmable magnitude and polarity signal control within the PPLR 30 as will be described in more detail below. A read circuit 88 is also provided within the preamplifier 20 to read data associated with the storage media 48 and GMR head 40 during a non-reset mode of the system 10.

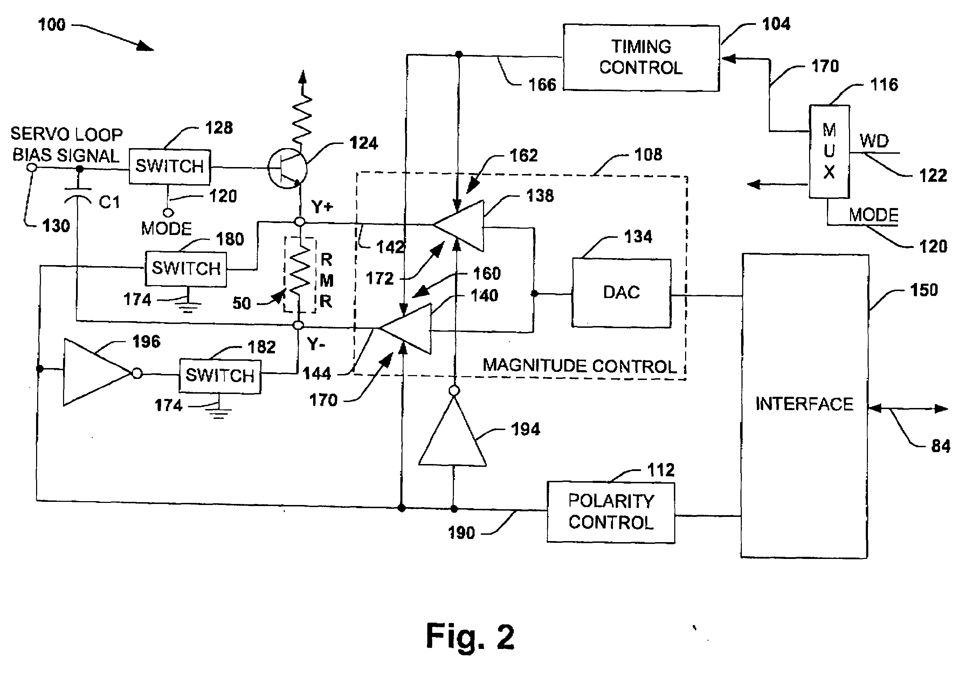

Referring now to Fig. 2, an exemplary programmable pin layer reset circuit (PPLR) 100 is illustrated in accordance with the present invention (*e.g.*, corresponding to PPLR 30 of Fig. 1). The PPLR 100 includes at least one of a programmable timing control 104, a programmable signal magnitude control 108 and a programmable polarity control 112 of the RMR 50 (note that in Fig. 2, the RMR 50 is illustrated within a dotted box to indicate that the RMR 50 is external to the PPLR 100). A MUX circuit 116 is controlled via a mode signal 120 and routes write data 122 to the timing control 104. The mode signal 120 also disables a filter cap C1 and first stage read amplifier or drive transistor 124 via a switch 128 during pin layer resets. The read amplifier transistor 124 which may be driven by a servo loop bias signal 130 provides a bias current to the RMR 50 during non-reset mode of the PPLR 100 and forms the first stage cascode read amplifier.

The signal magnitude control 108 includes a digital to analog converter (DAC) 134 that drives signal buffers 138 and 140 that provide voltage or current in either the Y+ or Y- direction across the RMR 50. The DAC 134 can be substantially any DAC for providing a programmable output voltage or current. For example, the DAC 134 may include serial or parallel inputs and may provide voltage or current outputs as will be described in more detail below. The DAC 134 is driven by an interface 150 that is driven by the data and control bus 84 described above. The interface 150 can be substantially any interface for receiving the data and control signals 84 and providing a data output 154 for adjusting the DAC 134 output magnitude. For example, the interface 150 may include a serial to parallel interface, a serial to serial interface, a parallel to serial interface, and a parallel to parallel interface in order to interface to serial or parallel inputs and providing serial or parallel outputs, as may be desired. Therefore, the magnitude control 108 operates in accordance with the interface 150 to provide a reset signal having programmable amplitude to reset the pin layer *via* the RMR 50. Since the reset signal is programmable, an appropriate signal amplitude is utilized for the particular type GMR head 40 being employed. It is noted that a disk drive controller (not shown) interfacing to the preamplifier 120 illustrated in Fig. 1, may include a table having a plurality of parameters for configuring various magnitude reset signals, each parameter corresponding to a particular type of GMR head.

Programmable timing for signal buffer outputs 142 and 144 is provided via the timing control 104. This is achieved by modulating enable signals 160 and 162 associated with the signal buffers 138 and 140 from a timing control output 166. Modulation is provided, for example, by toggling write data 122 (*e.g.*, via the user interface 60 illustrated in Fig. 1) for "N" transitions, N being an integer, at an input 170 of the timing control 104. For example, a pulse 20 bits in width can be provided at the timing output 166 by toggling the timing input with 20 data bit transitions. It is to be appreciated that other implementations are possible. For example, the timing control 104 could include an off-the-shelf programmable timer that is configured as is well understood by writing to configuration registers on board the timer. Therefore, the timing control 104 operates in conjunction with the buffers 138 and 140 to vary a timing interval in which a reset signal is asserted across the RMR 50 during a pin layer reset. Thus, different types of GMR heads may be reset utilizing the PPLR 100 of the present invention. As described above in relation to the programmable magnitude control of the present invention, a disk drive controller (not shown) interfacing to the preamplifier 120 illustrated in Fig. 1, may include a table having a plurality of parameters for configuring various timing control reset signals, each parameter corresponding to a particular type of GMR head.

Programmable polarity control is provided by the polarity control 112. It is noted that this circuit could also be provided as a programmable output within the interface 150. It is further noted that the MUX 116 could also be included within the interface 150. The polarity control 112 enables voltage or current to be directed through the RMR 50 in either the Y+ or Y- direction. In this manner, negative voltages do not have to be generated within the PPLR 100 and/or within the preamplifier described above. This is advantageous for integrated circuit designs that are not easily configurable for negative substrate potentials and thus avoids potential latch-up conditions, etc.

The polarity control 112 enables either the signal buffer 138 or 140 via enable inputs 170 and 172. A ground 174 is coupled to either end of the RMR 50 via switches 180 and 182, respectively. Polarity is controlled by enabling a buffer/switch pair to control the direction of voltage or current through the RMR 50. For example, if a polarity output 190 were set to high, buffer 140 is enabled along with the switch 180, which drives voltage or current in the Y+ direction. Conversely, if the polarity output 190 were set low, the buffer 138 and switch 182 are enabled via inverters 194 and 196 respectively, which drives voltage or current in the Y- direction across the RMR 50. The switches 180, 182, and 128 can be substantially any electronically controllable switches. For example, the switches may include FETs, MOSFETS, transistors, and/or gates. Therefore, the reset signal polarity may be adjusted via the polarity control and interface 150 to reset different types of GMR heads 40. As described above in relation to the programmable magnitude and timing control of the present invention, the user interface 60 of the preamplifier 20 illustrated in Fig. 1, may include a table (*e.g.*, registers) having a plurality of parameters for configuring various polarity reset signals, each parameter corresponding to a particular type of GMR head.

It should also be noted that the above discussion relating to the operation of switches 180 and 182 relates to the PPLR 100 being activated and thus the preamplifier 20 operating in a pin layer reset mode. However, in a standard operating mode in which the preamplifier is not attempting to reset the pin layer (*e.g.*, a read mode), the switch 180 is open and the switch 182 is closed, thereby coupling the Y- terminal of the RMR 50 to ground 174.

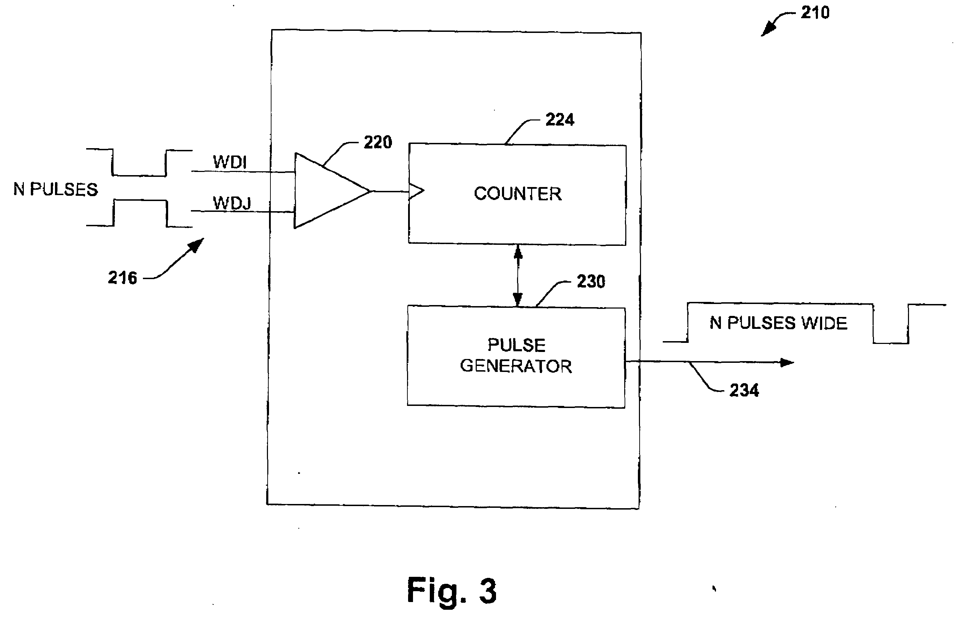

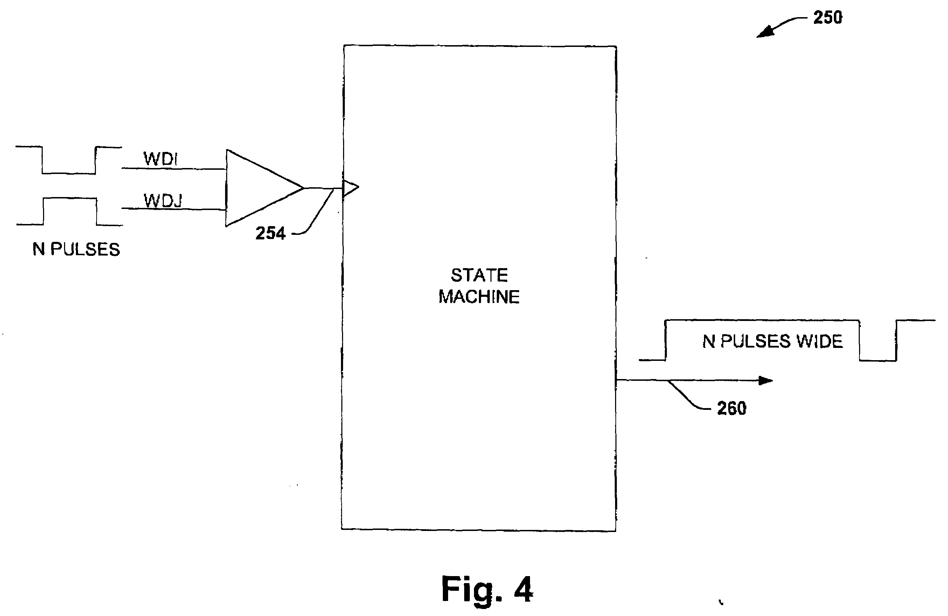

Turning now to Fig. 3, one possible timing control circuit 210 (*e.g.*, corresponding to circuit 104 of Fig. 2) is illustrated in accordance with the present invention. The timing control 210 depicts an exemplary logic implementation. According to this aspect of the invention, N write data pulses 216 are input to a buffer 220 that clocks the input of an N bit counter 224. The N bit counter 224 feeds a pulse generator 230 that provides an output 234 N pulses wide. Therefore, the number of input bit transitions clocked at the counter 224 determines the number of N counts generated by the counter 224. The pulse generator 230 then translates the N counts to the N bit pulse output 234. Fig. 4 illustrates an alternative aspect of the present invention, wherein a state machine 250 implementation for a timing control circuit is provided. The state machine 250 receives N bit transitions at a clock input 254 and generates a pulse output 260 of N bits wide. The state machine can be implemented in a plurality of designs. These designs may include programmable logic implemented in VHDL, for example.

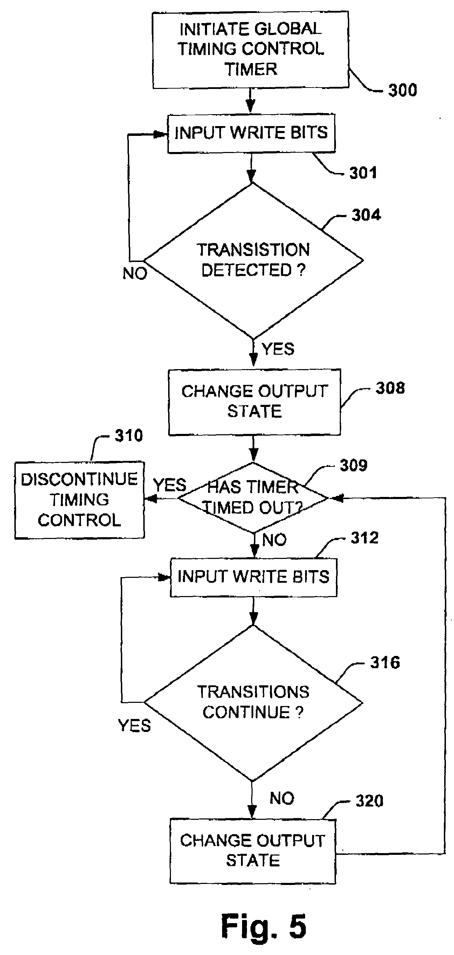

Referring to Fig. 5, one possible implementation for the state machine depicted in Fig. 4 is illustrated in a flow chart diagram. It is to be appreciated that a plurality of other implementations may be similarly implemented as are well understood and such alternatives are contemplated as falling within the scope of the present invention. At step 300 a global timing control sequence is initiated representing a predetermined time period in which the pin layer reset function will be active, which may vary based on the type of GMR head being employed. A transition detector is provided at steps 301 and 304. At step 301 write bits are input. At step 304, a determination is made as to whether a transition has occurred. If no transition has been detected at step 304, the process proceeds back to step 301. If a transition has been detected at step 304, the process proceeds to step 308. At step 308, the process toggles a timing output from the current state to an opposite state. A check is then made at step 309 to see if timing sequence has completed, indicating a time out condition. If not, at step 312, the write bits are again input to the process. If a time out condition is detected, however, then the reset routine is complete and timing control is discontinued at step 310.

At step 316, a determination is made as to whether the transitions appearing at the input of the state machine have discontinued. This may be determined, for example, by setting a time delay slightly longer than a bit length and determining whether a transition has occurred since the delay. If the transitions have been detected, the process proceeds back to step 312 and inputs the write bits. If the transitions have discontinued, the process proceeds to step 320, changes the output state to the opposite state and then proceeds back to step 309, wherein a determination is made whether a time out has occurred.

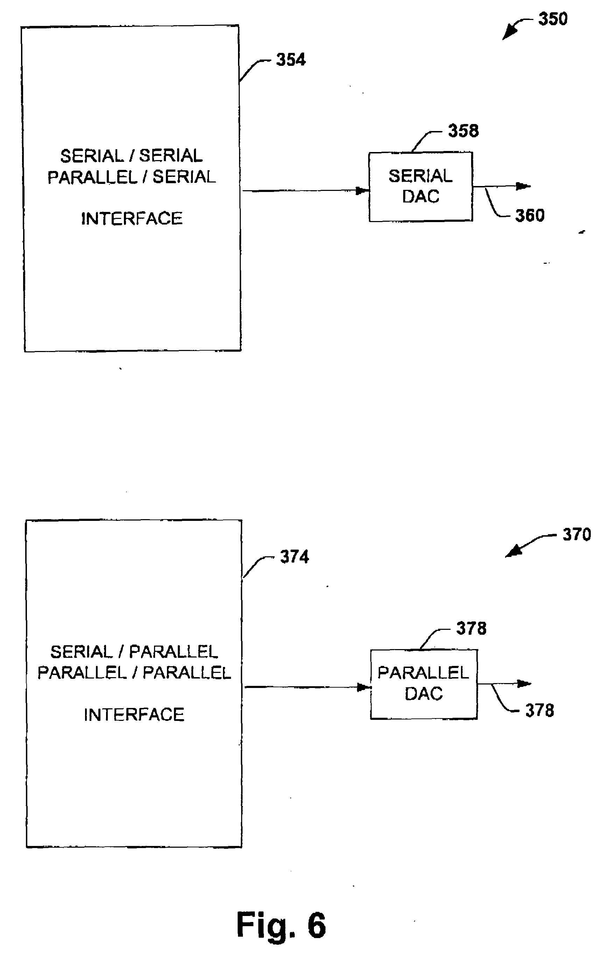

Referring now to Fig. 6, an alternative aspect for programmable magnitude control of a pin layer reset signal is illustrated in accordance with the present invention. One exemplary programmable magnitude control is illustrated at reference numeral 350. According to this aspect of the invention, an interface 354 drives a serial DAC 358. The serial DAC can provide either a voltage or current output 360. As illustrated, the interface 354 can be either a serial to serial converter or a parallel to serial converter in order to interface to the DAC 358. For example, UART's or other multifunction peripheral chips may be employed as the interface 354. Referring now to reference numeral 370, another aspect of the invention is illustrated. According to this aspect of the invention, an interface 374 drives a parallel DAC 378. The parallel DAC 378 can provide either a voltage or current output 380. As illustrated, the interface 374 can be either a serial to parallel converter or a parallel to parallel converter in order to interface to the DAC 378. For example, UART's, other multifunction peripheral chips, and/or latches may be employed as the interface 374.

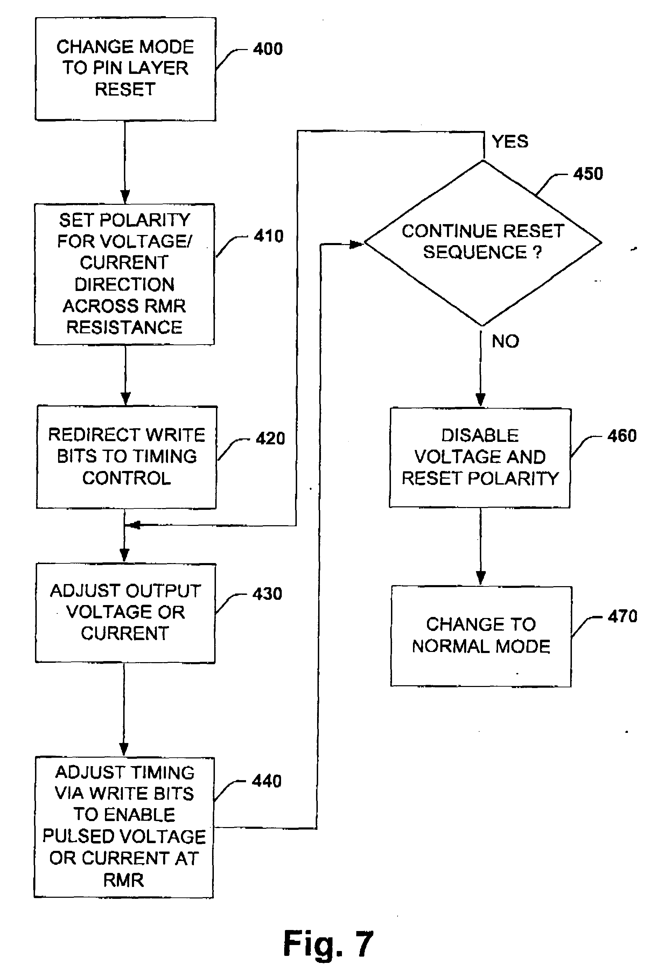

Referring now to Fig. 7, a flow chart diagram illustrates a methodology for providing a programmable pin layer reset in accordance with an aspect of the present invention. While for purposes of simplicity, the methodology of Fig. 7 is shown and described as a series of steps, it is to be understood and appreciated that the present invention is not limited to the order of steps, as some steps may, in accordance with the present invention, occur in different orders and/or concurrently with other steps from that shown and described herein.

Proceeding to step 400, a mode change occurs to switch from normal read/write operation associated with a GMR head and storage medium to a pin layer reset mode. At step 410, a polarity is set to define the direction of the voltage or current through the RMR resistance. This may be achieved, for example, without utilizing negative voltages when attempting to reverse directions. For example, switches may be employed to route voltage or current in opposing directions through the RMR. At step 420, write bits that normally control writing to the GMR head are routed to a timing function. At step 430, output voltage or current is adjusted across the RMR via a programmable voltage or current source. At step 440, timing is adjusted or modulated via the write bits that were routed in step 420 to enable a pulsed voltage or current across the RMR. At step 450, a decision is made as to whether to continue the pin layer reset sequence. If the reset sequence should continue, the process proceeds back to step 430 and adjusts output magnitude and/or timing at step 440 if necessary. If the reset sequence is complete at step 450, the process proceeds to step 460. At step 460, the RMR reset voltage or current is disabled and polarity is reset across the RMR if necessary. At step 470, the mode is changed from pin layer reset mode to normal read/write mode of the GMR head and storage media.

Although the invention has been shown and described with respect to a certain preferred embodiment or embodiments, it is obvious that equivalent alterations and modifications will occur to others skilled in the art upon the reading and understanding of this specification and the annexed drawings. In particular regard to the various functions performed by the above described components (assemblies, devices, circuits, etc.), the terms (including a reference to a "means") used to describe such components are intended to correspond, unless otherwise indicated, to any component which performs the specified function of the described component (*i.e.*, that is functionally equivalent), even though not structurally equivalent to the disclosed structure which performs the function in the herein illustrated exemplary embodiments of the invention. In addition, while a particular feature of the invention may have been disclosed with respect to only one of several embodiments, such feature may be combined with one or more other features of the other embodiments as may be desired and advantageous for any given or particular application. Furthermore, to the extent that the term "includes" is used in either the detailed description or the claims, such term is intended to be inclusive in a manner similar to the term "comprising."

**Claims**

1. A GMR head system, comprising:

    a preamplifier for reading, writing, or biasing a GMR head having a pin layer associated therewith; and
    a pin layer reset circuit operably associated with the preamplifier for generating a programmable signal to reset the pin layer, wherein the programmable signal is adjustable according to at least one of a signal magnitude, signal polarity, signal pulse duration, and signal duty cycle.

2. The system of claim 1, wherein the programmable signal is a voltage or a current.

3. The system of claim 1, further comprising:

    a mode signal for enabling the pin layer reset circuit and disabling at least one of the read, write, and bias associated with the preamplifier.

4. The system of claim 3, further comprising:

    a multiplexor for routing write data associated with the preamplifier to the pin layer reset circuit when the pin layer reset circuit is enabled.

5. The system of claim 3, wherein the mode signal disables at least a portion of the bias associated with the preamplifier while the pin layer reset circuit is enabled.

6. The system of claim 2, wherein the pin layer reset circuit comprises a polarity control for directing a positive and a negative voltage and current to the pin layer for resetting thereof.

7. The system of claim 6, further comprising:

    at least one switch that is controlled via the polarity control for directing the positive and the negative voltage and current to the pin layer.

8. The system of claim 8, wherein the switch is at least one of a gate, transistor, FET, and MOSFET.

9. The system of claim 2, wherein the pin layer reset circuit comprises at least one buffer for driving the voltage and current at the pin layer for resetting thereof.

10. The system of claim 9, further comprising:

    a digital to analog converter (DAC) for adjusting an amplitude of the voltage and current based on data associated with the GMR head.

11. The system of claim 10, wherein the DAC is at least one of a serial DAC and a parallel DAC.

12. The system of claim 11, further comprising:

    at least one of a serial interface and a parallel interface for controlling the DAC.

13. The system of claim 9, wherein the pin layer reset circuit further comprises:

    a timing control for selectively enabling the at least one buffer and thereby adjusting a pin layer reset signal pulse duration or a pin layer reset signal duty cycle.

14. The system of claim 13, wherein the timing control is provided *via* at least one of a logic circuit and a state machine circuit.

15. The system of claim 14, wherein the logic circuit includes at least one of a counter and a pulse generator.

16. The system of claim 14, wherein the state machine circuit sets an output based upon an input transition, wherein the output is reset a period of time after input transitions are discontinued.

17. A method of providing a pin layer reset signal to a GMR head, comprising:

    generating a configurable signal;
    adjusting at least one of a magnitude, polarity, and timing parameter associated with the configurable signal based on data associated with the GMR head; and
    resetting a pin layer associated with a GMR head *via* the configurable signal.

18. The method of claim 17, wherein the configurable signal is at least one of a voltage and a current.

19. The method of claim 17, further comprising:

    generating a signal to enable resetting of the pin layer reset circuit and disable at least one of a read, write, and bias associated with a preamplifier.

**20.** The method of claim 19, further comprising:

routing write data associated with the preamplifier to enable resetting of the pin layer.

**21.** The method of claim 19, further comprising:

disabling at least a portion of the bias associated with the preamplifier while resetting the pin layer.

**22.** The method of claim 18, further comprising:

directing a positive and a negative voltage and current to the pin layer.

**23.** A GMR head system, comprising:

means for reading, writing, and biasing a GMR head having a pin layer; and
means for generating a programmable signal to reset the pin layer, wherein the programmable signal is adjustable according to at least one of a signal magnitude, signal polarity, signal pulse duration, and signal duty cycle.

**24.** A high density disk drive, comprising:

a storage media;
a preamplifier for reading, writing, or biasing a GMR head having a pin layer and operatively coupled to the storage media; and
a pin layer reset circuit operably associated with the preamplifier for generating a configurable signal to reset the pin layer, wherein the configurable signal is adjustable according to at least one of a signal magnitude, signal polarity, signal pulse duration, and signal duty cycle.

**Fig. 1**

Fig. 2

EP 1 235 205 A2

N PULSES

WDI

WDJ

216

220

224

COUNTER

230

PULSE
GENERATOR

234

210

N PULSES WIDE

**Fig. 3**

EP 1 235 205 A2

250

WDI

WDJ

N PULSES

254

STATE
MACHINE

N PULSES WIDE

260

**Fig. 4**

```
        ┌─────────────────────┐
        │   INITIATE GLOBAL   │
        │   TIMING CONTROL    │
        │       TIMER         │──── 300
        └─────────────────────┘
                  │
                  ▼
        ┌─────────────────────┐
   ┌───▶│  INPUT WRITE BITS   │
   │    └─────────────────────┘──── 301
   │              │
   │              ▼
   │           ╱╲  304
   │          ╱  ╲
   │         ╱    ╲
   │        ╱ TRAN- ╲
  NO ◀─────╱ SISTION  ╲
         ╲ DETECTED ? ╱
          ╲         ╱
           ╲       ╱
            ╲     ╱
             ╲   ╱
              ╲ ╱
               │ YES
               ▼
        ┌─────────────────────┐
        │   CHANGE OUTPUT     │──── 308
        │      STATE          │
        └─────────────────────┘
                  │
   ┌───────────┐  ▼           309
   │DISCONTINUE│ ╱╲──────
   │  TIMING   │◀── YES ╱ HAS TIMER╲◀────┐
   │  CONTROL  │     ╲ TIMED OUT? ╱      │
   └───────────┘      ╲          ╱       │
       310             ╲   NO   ╱        │
                        ╲  │   ╱         │
                         ╲ ▼  ╱          │
                          ▼             │
        ┌─────────────────────┐         │
   ┌───▶│  INPUT WRITE BITS   │──── 312  │
   │    └─────────────────────┘         │
   │              │                     │
   │              ▼                     │
   │           ╱╲  316                  │
   │          ╱  ╲                      │
   │         ╱    ╲                     │
   │        ╱      ╲                    │
  YES ◀────╱ TRANSITIONS╲               │
         ╲  CONTINUE ?  ╱               │
          ╲           ╱                 │
           ╲         ╱                  │
            ╲       ╱                   │
             ╲     ╱                    │
              ╲ ╱ NO                    │
               │                        │
               ▼                        │
        ┌─────────────────────┐   320   │
        │   CHANGE OUTPUT     │─────────┘
        │      STATE          │
        └─────────────────────┘
```

# Fig. 5

13

**Fig. 6**

**Fig. 7**

CHANGE MODE TO PIN LAYER RESET ~ 400

SET POLARITY FOR VOLTAGE/ CURRENT DIRECTION ACROSS RMR RESISTANCE ~ 410

REDIRECT WRITE BITS TO TIMING CONTROL ~ 420

ADJUST OUTPUT VOLTAGE OR CURRENT ~ 430

ADJUST TIMING VIA WRITE BITS TO ENABLE PULSED VOLTAGE OR CURRENT AT RMR ~ 440

CONTINUE RESET SEQUENCE ? ~ 450

YES

NO

DISABLE VOLTAGE AND RESET POLARITY ~ 460

CHANGE TO NORMAL MODE ~ 470